# EUROPÄISCHE PATENTSCHRIFT

(11) **EP 1 340 303 B1**
(45) Veröffentlichungstag und Bekanntmachung des Hinweises auf die Patenterteilung: **30.08.2006**
(21) Anmeldenummer: 01972030.9
(22) Anmeldetag: 08.09.2001
(51) Int. Cl.: H02J 13/00, G05B 23/02

(54) **VERFAHREN ZUR ANZEIGE DES BETRIEBSVERHALTENS VON ANLAGEN**
METHOD FOR DISPLAYING THE OPERATING CONDITIONS OF AN INSTALLATION
PROCEDE D'AFFICHAGE DU FONCTIONNEMENT D'INSTALLATIONS

(30) Priorität: 14.10.2000 DE 10050993
(43) Veröffentlichungstag der Anmeldung: 03.09.2003
(73) Patentinhaber: Wobben, Aloys, 26607 Aurich (DE)
(72) Erfinder: Wobben, Aloys, 26607 Aurich (DE)
(74) Vertreter: Eisenführ, Günther
(86) Internationale Anmeldenummer: PCT/EP2001/010387
(87) Internationale Veröffentlichungsnummer: WO 2002/033802

(56) Entgegenhaltungen:
- EP-A- 0 853 368
- WO-A-00/04427
- US-A- 4 833 592
- US-A- 5 719 558

## Beschreibung

Die Erfindung betrifft ein Verfahren zur Anzeige des Betriebsverhaltens von Anlagen, wie z. B, Windenergieanlagen, Wasseraufbereitungsanlagen, Blockheizkraftwerken, Umspannstationen, etc.

Aus US 5,719,558 ist bereits die Überwachungseinrichtung eines Kraftwerks bekannt und hierbei können verschiedene Betriebszustände verständlich dargestellt werden. Aus WO 00/04427 ist bekannt, wie bestimmte Informationen über ein Internet-Netzwerk übertragen werden können. Aus US 4,833,592 ist eine übergeordnete Vorrichtung zur Femüberwachung und Kontrolle bekannt und aus EP 0 853 368 A2 ist ein elektrisches Steuersystem bekannt.

Es ist femer bekannt, dass das Betriebsverhalten einer Anlage ständig erfasst werden kann und die erfassten Daten auch dem Betreiber der Anlage zur Ver fügung gestellt werden können. Verfügt beispielsweise der Betreiber einer Anlage über eine entsprechende Telekommunikationseinrichtung (z.B. ein Modem), kann er sich über alle relevanten Daten seiner Anlage informieren, beispielsweise ob sie in Betrieb ist, mit welcher Leistung sie gegenwärtig arbeitet oder ob eine Störung vorliegt, und wenn ja, was der Grund für die Störung ist USW. Selbstverständlich können auch Umgebungsdaten an der Anlage, aber auch andere gemessene Daten der Anlage abgerufen werden.

Diese Umgebungsdaten können bei Windenergfeanlagen z. B. Windrichtung, Windgeschwindigkeit, Temperatur, etc. sein, während dies bei Wasseraufbereitungsanlagen z. B. Pegelstände, Temperaturen, etc. sein können.

Die vorbeschriebene Lösung ist jedoch stets auf den Kunden des Herstellers, also in der Regel den Betreiber der Anlage zugeschnitten und Dritte haben keine Möglichkeit, die Daten einzusehen, handelt es sich doch um geheimzuhattende Betriebsdaten, die nicht jedermann zugänglich gemacht werden sollen bzw, dürfen.

Gleichwohl ist es wünschenswert, auch Dritten bestimmte Betriebsdaten von einer Vielzahl von Anlagen, beispielsweise der Anlagen eines Herstellers, zur Verfügung zu stellen, damit diese sich einen Überblick über die Zuverlässigkeit der Anlagen verschaffen können, wobei dennoch der Wunsch der Anlagenbetreiber nach einer Vertraulichkeit gewahrt bleibt.

Die Erfindung hat sich zum Ziel gesetzt, hierfür eine technische Lösung bereitzustellen, die vor allem attraktiv ist und eine schnelle Möglichkeit bietet, sich einen Überblick über Standorte und/oder das Betriebsverhalten von Anlagen zu verschaffen.

Das Ziel der Erfindung wird mit dem Verfahren mit dem Merkmal nach Anspruch 1 erreicht. Vorteilhafte Weiterbildungen sind in den Unteransprüchen beschrieben.. Bei der Formulierung von Anspruch 1 wurde vom Dokument US 5,719,558 als nächstliegender Stand der Technik ausgegangen,

Die Erfindung beruht auf folgende Überlegungen:

Die Betriebsdaten von Anlagen, beispielsweise der Anlagen eines bestimmten Herstellers, werden erfasst. Die erfassten Betriebsdaten werden klassifiziert, beispielsweise dahingehend, ob die Anlage überhaupt funktionsbereit ist (ob sie, im Falle einer Windenergieanlage z. B. mit dem Netz verbunden ist) oder nicht. Ist die Anlage nicht funktionsbereit, kann dies noch weiter klassifiziert werden, beispielsweise dahingehend, dass auch der Grund für die Nichtfunkktionstüchtigkeit / der Anlagenstörung genannt wird. Die Nichtfunkfionstüchtigkeit kann beispielsweise durch einen Betriebsausfall verursacht sein - ein technischer Fehler (z.B. ein Brand im Generator einer Windenergieanlage) - oder aber auch durch gewöhnliche Wartungen, die von Zeit zu Zeit bei Anlagen vorgenommen werden müssen und währenddessen die Anlagen häufig abgeschaltet werden müssen.

Ist die Anlage funktionstüchtig, kann unter Umständen angegeben werden, ob sie unter Nennbetriebsbedingungen arbeitet oder nicht.

Die so klassifizierten Daten können zusammengefasst und dann gegebenenfalls der jeweiligen geographischen Position der jeweiligen Anlage zugeordnet werden. Alternativ kann natürlich auch eine Zuordnung der Daten zu der jeweiligen Anlage selbst anhand eines eindeutigen Unterscheidungsmerkmals wie z. B. einer Seriennummer erfolgen. Dabei können ebenso den Standort der Anlage beschreibende geographische Daten der Anlage zugeordnet werden. Schließlich wird in einer Übersicht wie z. B. einer geographischen Karte (z.B. einer Deutschlandkarte) für jede Anlage oder eine Gruppe von Anlagen ein Symbol angegeben, wobei sich aus dem Symbol die Art der Anlage sowie der Betriebsstatus der jeweiligen Anlage oder einer Gruppe von Anlagen ableiten lässt. Dabei wird das Symbol nach einem vorgebbaren Algorithmus aus den der Anlage zugeordneten Daten automatisch abgeleitet.

So kann beispielsweise ein Symbol wie ein grüner Kreis bedeuten, dass die Anlage eine Windenergieanlage ist, die sich (funktionstüchtig) in Betrieb befindet, während ein Symbol wie ein roter Kreis darauf hindeutet, dass die Anlage außer Betrieb ist. Das Symbol rot-grüner Kreis (ein roter Halbkreis und ein grüner Halbkreis werden zu einem Kreis zusammengesetzt) kann darauf hindeuten, dass die Anlage zwar grundsätzlich funktionstüchtig ist, aber aufgrund von Wartungsarbeiten abgeschaltet ist.

Die so erstellte Übersicht kann verschiedenartige Anlagen verzeichnen und wird ständig aktualisiert, als elektronische Datei gespeichert und in einem Informationsnetzwerk, z.B. einem Internetnetzwerk, zur Verfügung gestellt und über eine Internet-Domainadresse, beispielsweise über die Adresse des Anlagenherstellers, abrufbar gemacht.

Nunmehr kann sich jeder, der über einen Internetzugang verfügt, über die gesamte von dem Anlagenhersteller hergestellte "Flotte" von Anlagen innerhalb eines bestimmten geographischen Gebietes, zum Beispiel innerhalb Deutschlands, ein Bild machen. Hierbei erfährt er nicht nur, wo sich solche Anlagen befinden, sondern auch, wie der jeweilige Betriebszustand ist, also ob die Anlage in Betrieb ist oder ob sie aufgrund einer Funktionsstörung nicht einwandfrei arbeitet.

Es ist auch vorteilhaft, noch weitere Daten einem Betriebsstandort einer Anlage nicht nur zuzuordnen, sondern auch schon in der Karte darzustellen. Solche Daten können beispielsweise die Betriebszeiten eines bestimmten vergangenen Zeitraums sein, zum Beispiel des vergangenen Monats, des letzten Jahres usw., so dass der Betrachter auch ein aussagekräftiges Bild über die Zuverlässigkeit einer Anlage gewinnt.

Durch die stets aktualisierte Erfassung von Betriebsdaten kann somit über ein Netz, wie gemäß Anspruch 1 das Internet, jedermann Online eine stets aktualisierte Karte zur Verfügung gestellt werden, die dem Betrachter auch stets aktuell (oder mit der Aktualität eines Tages oder einer Woche) die Funktionstüchtigkeit einer Vielzahl von Anlagen in einem bestimmten geographischen Gebiet verdeutlichen.

Die Erfindung wird anhand eines Ausführungsbeispiel in den Zeichnungen näher erläutert. Hierin zeigen
- Fig. 1: einen prinzipiellen Aufbau zur Erstellung einer Karte,
- Fig. 2: ein Ausführungsbeispiel einer Karte, und
- Fig. 3: eine alternative Darstellung zu Figur 2.

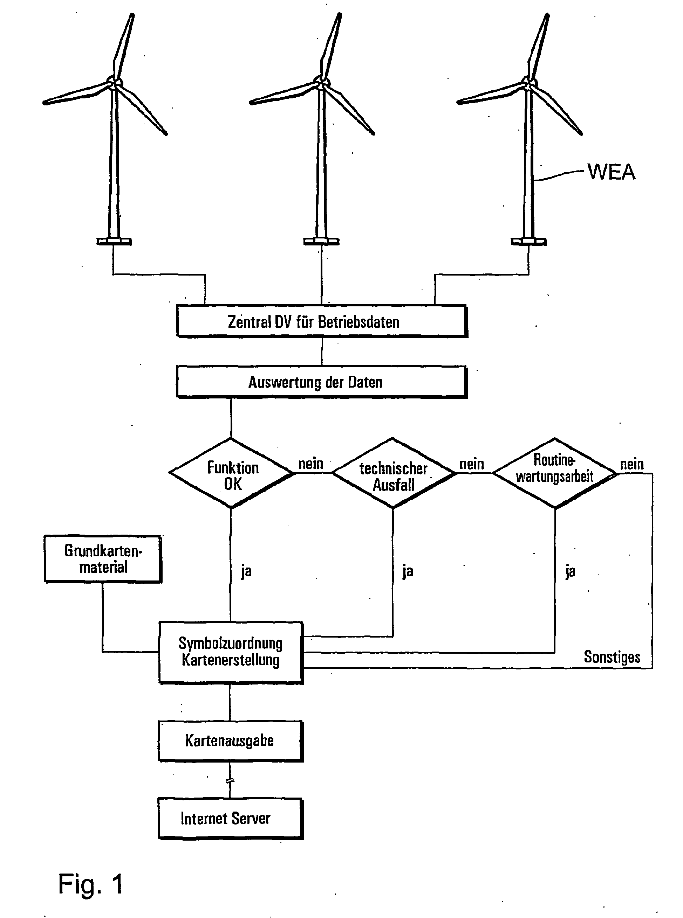

Figur 1 zeigt symbolisch eine Zahl von N Anlagen, wobei in dem nachfolgend beschriebenen Beispiel Windenergieanlagen (WEA) betrachtet werden. Hierbei soll es sich um sämtliche oder wenigstens einen bestimmten Teil der Anlagen eines Herstellers oder eines Betreibers handeln, die in einem bestimmten geographischen Gebiet aufgestellt sind und von den Betreibern unterhalten werden.
Von den Anlagen besteht eine direkte oder indirekte Datenverbindung zur einer zentralen Datenverarbeitung, zu der alle an den Anlagen gemessenen Betriebsdaten übermittelt und dort verarbeitet werden. Die Daten sind beispielsweise die Leistungsdaten, Winddaten und auch Temperaturdaten bestimmter Aggregate usw.

Nach der Erfassung der Daten erfolgt eine Auswertung und Klassifizierung der Daten hinsichtlich vorgegebener Funktionen der Anlagen. So wird aus den Betriebsdaten zunächst ermittelt, ob die Anlage überhaupt Leistung abgibt bzw. funktionstüchtig ist. Diese Information wird bei der Erstellung bzw. Aktualisierung einer elektronischen Übersicht zu Grunde gelegt.

Ist die Funktionstüchtigkeit nicht gegeben, so wird geprüft, ob dies auf einen technischen Ausfall zurückzuführen ist. Ist dies der Fall, so wird diese Information ebenfalls für die Übersichtserstellung bzw. Aktualisierung verarbeitet. Liegt jedoch kein technischer Ausfall vor (technische Ausfälle sind solche Ausfälle, die auf das Versagen von bestimmten technischen Elementen der Anlage zurückzuführen sind, wie beispielsweise Rotor, Generator, Wechselrichter, Transformator usw.), so wird geprüft, ob die Mängel der Funktionstüchtigkeit auf Routinewartungsarbeiten zurückzuführen sind.

Solche Routinewartungsarbeiten müssen in bestimmten Abständen bei Anlagen durchgeführt werden, um den sicheren Betrieb der Anlagen zu gewährleisten. Werden Routinewartungsarbeiten durchgeführt, so wird auch diese Information entsprechend bei der Übersichtserstellung weiterverarbeitet. Werden jedoch auch keine Wartungsarbeiten durchgeführt, so kann der Ausfall der Anlagen auf sonstige Gründe zurückgeführt werden. Ein solcher Grund kann auch sein, dass beispielsweise eine Anlage innerhalb eines Windparks zwar funktionstüchtig ist, jedoch der Anschluss zum gesamten Windpark gestört ist, weil zum Beispiel das gesamte Verbundnetz gestört ist oder der Betreiber des Verbundnetzes aus technischen Gründen eine Abkopplung des Windparks vom Verbundnetz vorgenommen hat.

Die jeweiligen Informationen werden in einem Block für die Symbolzuordnung zur Erstellung einer elektronischen Übersicht verarbeitet. In diesem Block wird z. B. auch Grundkartenmaterial, zum Beispiel eine geographische Deutschlandkarte, in elektronischer Form verarbeitet.

Da jede Anlage einer eindeutigen geographischen Position zugeordnet ist, kann nunmehr eine Karte erstellt werden, in der jeder einzelnen Anlage einem Symbol zugeordnet wird, wobei Form und/oder Farbe und/oder. Darstellung des Symbols (z. B. blinkend oder nicht blinkend) angeben, ob die Anlage funktionstüchtig ist und wenn nein, wie der Grund für die Nichtfunktionstüchtigkeit klassifiziert ist, ob also ein technischer Ausfall vorliegt oder Wartungsarbeiten vorliegen oder ein sonstiger Grund gegeben ist.

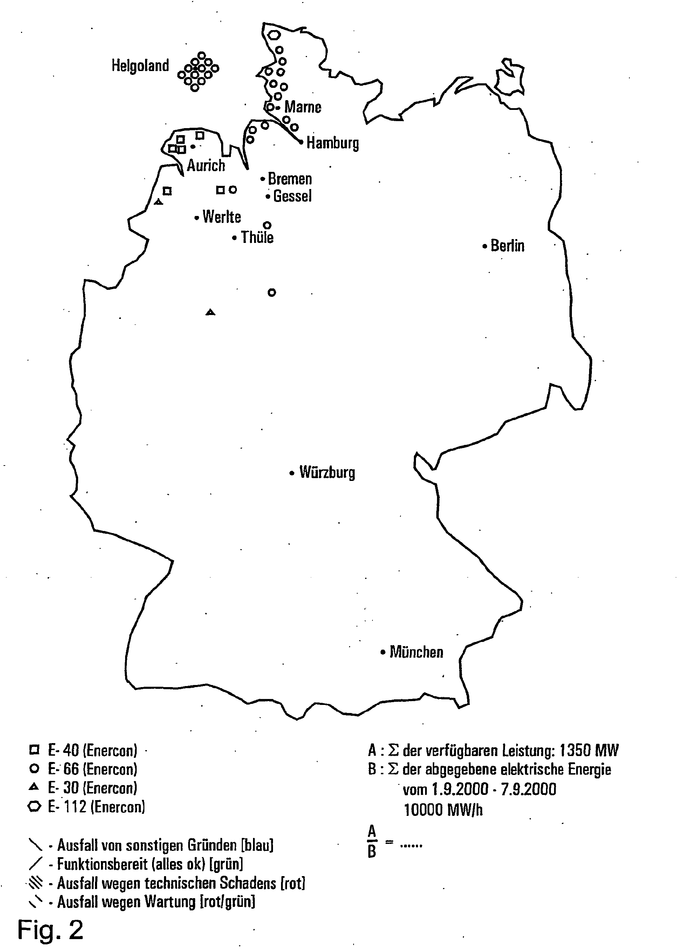

Nach der Kartenerstellung bzw. Aktualisierung wird diese gespeichert und ausgegeben -Figur 2- und beispielsweise dem internetserver des Herstellers der Anlagen zur Verfügung gestellt, so dass sich ein Interessent durch das Anklicken vorgegebener Symbole auf der Homepage des Herstellers / Betreibers über die gesamte "Flotte" der Anlagen des Herstellers / Betreibers informieren kann.

Selbstverständlich ist es auch möglich, dass bei der Karteneinblendung und der Änderung der Symbole die äußere Form der Symbole auch gleichzeitig die Art und/oder den Typ der Anlage symbolisiert.

So kann beispielsweise das Symbol Rechteck bedeuten, dass es sich um Windenergieanlagen eines bestimmten Typs aus der Leistungsklasse von etwa 500-600 kW handelt, während es sich bei einem runden Kreis um eine Anlage eines bestimmten Typs der Klasse von etwa 1,5 - 1,8 MW handelt.

Durch Berühren des Symbols einer Anlage bzw. eines Windparks mit einem Zeiger wie z. B. einem Mauszeiger oder durch Anklicken oder Doppelklicken auf das Symbol können weitere ausgewählte, freigegebene Informationen über die Anlage bzw. den Windpark angezeigt werden.

Darüber hinaus können die Symbole eine Verknüpfung mit dem Hersteller und/oder Betreiber der Anlage bzw. des Windparks aufweisen. Dadurch kann es Dritten ermöglicht werden, auf einfache Weise, z. B. per e-Mail, mit dem Hersteller / Betreiber Verbindung aufzunehmen und Informationen auszutauschen.

Für den Betreiber einer Anlage bzw. eines Windparks können weitere Daten verfügbar gemacht werden, so dass der Betreiber alle für ihn relevanten Daten über das internet abrufen kann.

Um einen Mißbrauch bzw. eine unerwünschte oder unberechtigte Einsicht in vertrauliche Daten zu verhindern, können bestimmte Daten in einem separaten (logischen) Bereich hinterlegt sein, der durch eine Zugangskontrolle wie eine Authentisierung o. ä. vor unbefugten Zugriffen geschützt ist.

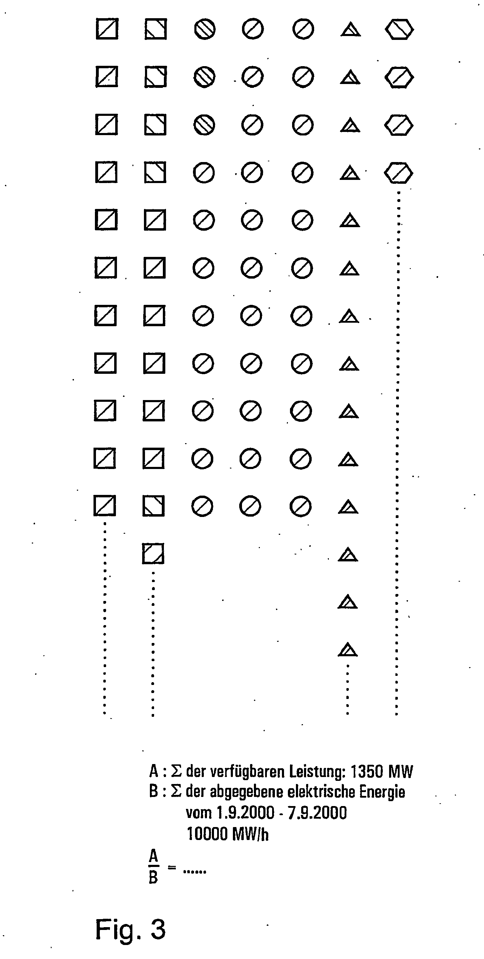

Alternativ zu der vorbeschriebenen Kartenerstellung ist es auch möglich, dass nicht eine geographische Karte - Figur 2 - erstellt wird, sondern dass in einer Gesamtübersichtsliste - Figur 3 - aller Anlagen erfasst werden, so dass dann diese Daten ohne den Bezug auf die Geographie in einer Gesamtübersichtsliste oder Tabelle erscheinen aus der dann der Betracher sofort entnehmen kann, wieviele Anlagen von dem Hersteller/Betreiber in Betrieb sind und wieviel davon wiederum auch funktionstüchtig sind (oder auch nicht).

Figur 2 zeigt als Beispiel eine Deutschlandkarte (symbolisiert) mit den darin aufgezeichneten Symbolen für einzelne Anlagen. Hierin bedeutet die äußere Form eines Symbols einen bestimmten Typ einer Anlage, zum Beispiel steht ein Quadrat für den Typ E-40 (der Firma Enercon), eine Anlage aus dem Leistungsbereich 500-600 kW, ein Kreis steht beispielsweise für den Typ E-66 (der Firma Enercon), eine Anlage aus dem Leistungsbereich von 1,5-1,8 MW, ein Dreieck steht für den Typ E-30 - eine Anlage aus dem Leistungsbereich von 200-300 kW.

Sind eine Vielzahl von Anlagen in einem Windpark zusammengefasst, so kann auch dies durch ein entsprechendes eigenständiges (Windpark-) Symbol gekennzeichnet werden.

Die Farbgebung der Symbole oder deren Schraffur oder Darstellung (z. B. schnell, langsam oder nicht blinkend) symbolisieren die Funktionstüchtigkeit der Anlage bzw. wenn diese nicht gegeben ist, den möglichen Grund für den Ausfall. Auf eine solche Weise kann auch das Abweichen von vorgegebenen Eckdaten bzw. Vergleichswerten angezeigt werden, um die Abweichung zu signalisieren.

Figur 3 zeigt eine alternative Übersichtsdarstellung, bei der jedoch der geographische Bezug der Anlage nicht gegeben ist. Während in der Karte nach Figur 2 auch die einzelne Position der Anlage ungefähr zu erkennen ist, fehlt dieser Bezug in der Darstellung in Figur 3. Allerdings kann der Betrachter der Übersicht nach Figur 3 noch schneller als aus der Karte in Figur 2 ersehen, wie es um die Funktionstüchtigkeit der Anlagen "Flotte" des Herstellers / Betreibers, der die Informationen im Internet zur Verfügung stellt, bestellt ist.

Die jeweiligen Karten bzw. Übersichten können durch die ständige Betriebsdatenerfassung aktuell, das heißt mit der Aktualität von einem Tag oder weniger, aber auch mit der Aktualität einer Woche erstellt werden. Der Betrachter der Karte/Übersicht kann daraus ersehen, wie zuverlässig (oder wie unzuverlässig) insgesamt die Anlagen eines bestimmten Herstellers / Betreibers sind und sich daraus ein Urteil über die Qualität der Anlagen bilden.

Neben den Funktions- oder Betriebsdaten der Anlagen können auch zu jeder Anlage die Winddaten angegeben werden und/oder die Betriebsdaten der einzelnen Anlagen bzw. die Daten über die gesamten von der Anlage abgegebenen Energiemengen. Besonders zweckmässig ist es, nicht nur die Leistungsverfügbarkeit -A- der gesamten Anlage und "Flotte" zu nennen, sondern auch die jeweils produzierte Menge -B-elektrischer Energie, bezogen auf bestimmte Zeiträume, zum Beispiel auf einen Tag, einen Monat, ein Jahr usw.

Um bei einer Mehrzahl verschiedener Anlagenarten die Übersichtlichkeit zu verbessern, kann wenigstens eine Anlagenart und bevorzugt jede gewünschte Anlagenart aus der Übersicht ausgeblendet werden, um so zur Darstellung einer geringeren Anzahl von Anlagenart in der Übersicht zu kommen.

Auf diese Weise kann der Betrachter sich auf die für ihn relevante Anlagenart beschränken und gewinnt schneller einen Eindruck der Situation gerade dieser Anlagenart. Auf diese Weise ist eine Übersicht z. B. über Windenergieanlagen oder eine Übersicht über Windenergieanlagen und Wasseraufbereitungsanlagen möglich.

Weiterhin ist vorteilhaft eine Änderung der Darstellung z. B. von einer geographisch orientierten Übersicht, wie in Fig. 2 gezeigt, zu einer tabellarisch aufgebauten Übersicht entsprechend Figur 3 und vice versa möglich, um eine Übersicht unter verschiedenen Ordnungskriterien wie räumlicher Anordnung (Fig. 2) oder auf der Basis statistischer Auswertungen z. B. nach Art und Typ der Anlagen (Fig. 3) zu erhalten.

Weiterhin kann eine zeitgleiche Darstellung mehrerer gleichartiger Ansichten, also z. B. die Darstellung mehrerer geographischer Teilbereiche nebeneinander vergleichende Betrachtungen erleichtern, wobei die Darstellungsgröße jeder einzelnen Darstellung an die Bedürfnisse des Betrachters anpassbar ist.

Alternativ können auch verschiedenartige Ansichten wie tabellarische Übersichten und geographisch orientierte Darstellungen nebeneinander dargestellt-werden.

## Patentansprüche

1. Verfahren zur Verarbeitung und Darstellung der Funktion einer Vielzahl von Windenergieanlagen, wobei
- vorbestimmte Betriebsdaten, insbesondere solche, aus denen sich die Funktionstüchtigkeit einer Anlage ergibt, in einer Datenverarbeitungsanlage erfasst werden;
- die erfassten Betriebsdaten werden ausgewertet und klassifiziert;
- die Klassifikation umfasst die Ermittlung der Information, ob die Anlage funktionstüchtig ist oder nicht, und wenn nicht, welcher Grund für die Nichtfunktionstüchtigkeit besteht, beispielsweise ein technischer Ausfall, Wartungsarbeiten;
- jeder Anlage oder einer Gruppe von Anlagen wird ein Symbol zugeordnet;
- das Symbol klassifiziert den Typ der Anlage und/oder die Funktionstüchtigkeit der jeweiligen Anlage:
- sämtliche Symbole werden zu einer Übersicht (Figur 2, Figur 3) zusammengestellt,
das Verfahren ist ferner **gekennzeichnet durch** folgende Schritte:
- sämtliche Symbole aus der Übersicht werden als elektronische Datei gespeichert und ausgegeben;
- die elektronische Datei wird an einen Internet-Netzserver ausgegeben, dem eine bestimmte Adresse zugeordnet ist, über den der Netzserver zum Abrufen der Dateien über das Internet anwählbar ist.

2. Verfahren nach Anspruch 1,
**dadurch gekennzeichnet, dass** zur Übersichtserstellung auch eine geographische Karte herangezogen wird und die Symbole am Ort der Anlage innerhalb der geographischen Karten angezeigt werden, wobei die geographische Karte in einer eigenen Datei gespeichert sein kann.

3. Verfahren nach einem der vorstehenden Ansprüche
**dadurch gekennzeichnet, dass** die Leistungsdaten der jeweiligen Anlagen, deren Daten erfasst werden, aufsummiert werden und bezogen auf einen bestimmten Zeitraum, z. B. pro Tag, pro Woche, pro Monat usw. zusammen mit der Übersicht angezeigt werden.

4. Verfahren nach Anspruch 3,
**dadurch gekennzeichnet, dass** die Summe (B) der Leistungsdaten ins Verhältnis gesetzt wird zur Summe der verfügbaren Leistung (A) aller gleichartigen Anlagen, deren Betriebsdaten erfasst und ausgewertet werden und dass dieser Wert zusammen mit den Übersichtsinformationen oder separat hiervon ausgegeben wird.

5. Verfahren nach Anspruch 4, **dadurch gekennzeichnet, dass** in der jeweils gewählten Übersicht wenigstens eine auswählbare Anlagenart ausblendbar ist.

6. Verfahren nach einem der vorstehenden Ansprüche, **dadurch gekennzeichnet, dass** eine Zugangskontrolle vorgesehen ist, die wenigstens Authentisierungsinformationen abfragt, nach deren korrekter Eingabe weitere Informationen dargestellt werden.

7. Verfahren nach einem der vorstehenden Ansprüche, **dadurch gekennzeichnet, dass** eine Abweichung von vorgebbaren Grenzwerten und/oder Vergleichswerten die Anzeige beeinflusst.

8. Verfahren nach einem der vorstehenden Ansprüche, **gekennzeichnet durch** eine zeitgleiche Darstellung mehrerer gleichartiger und/oder verschiedenartiger Übersichten und/oder die Möglichkeit eines Wechsels zwischen einer Mehrzahl von Übersichten, wobei die Darstellungsgröße wenigstens einer Übersicht und bevorzugt aller Übersichten veränderbar sind.

## Claims

1. A method for processing and displaying the functioning of a plurality of wind power installations, wherein
- pre-defined operating data, especially those revealing the operability of an installation, are acquired in a data processing system;
- the acquired operating data are evaluated and classified;
- the classification comprises ascertaining the information as to whether the installation is operable or not, and, if not, the reason for the non-operability, for example a technical failure, maintenance work;
- a symbol is allocated to each installation or to a group of installations;
- the symbol classifies the type of installation and/or the operability of the respective installation;
- all of the symbols are combined to form an overview (Figure 2, Figure 3),
the method further being **characterised by** the following steps:
- all of the symbols from the overview are stored as an electronic file and output;
- the electronic file is output to an Internet network server to which a specific address is assigned, by means of which the network server may be called for retrieval of the files over the Internet.

2. A method according to claim 1,
**characterised in that** a geographical map is also used to create the overview, and the symbols are displayed at the location of the installation within the geographical maps, wherein the geographical map may be stored in its own file.

3. A method according to either of the preceding claims,
**characterised in that** the power output data of the respective installations whose data are acquired are added up and displayed in relation to a specific period of time, e.g. per day, per week, per month, etc., together with the overview.

4. A method according to claim 3,
**characterised in that** the sum (B) of the power output data is set in relation to the sum of the available power output (A) of all similar installations whose operating data are acquired and evaluated, and that value is output together with or separately from the overview information.

5. A method according to claim 4, **characterised in that** at least one selectable type of installation may be blanked out in the respectively selected overview.

6. A method according to any one of the preceding claims, **characterised in that** an access control is provided which requests at least authentication information, after the correct entry of which further items of information are shown.

7. A method according to any one of the preceding claims, **characterised in that** a deviation from pre-definable limit values and/or comparison values influences the display.

8. A method according to any one of the preceding claims, **characterised by** simultaneous display of a plurality of overviews of the same type and/or of different types and/or by the possibility of switching between a plurality of overviews, wherein the display size of at least one overview and preferably of all overviews is variable.

## Revendications

1. Procédé pour traiter et afficher la fonction d'une pluralité d'installations d'énergie éolienne, sachant que
- des données d'exploitation prédéfinies, en particulier celles à partir desquelles résulte la capacité à fonctionner d'une installation, sont enregistrées dans un équipement de traitement de données ;
- les données d'exploitation enregistrées sont dépouillées et classées ;
- la classification comprend la détection des informations concernant la capacité de l'installation à fonctionner ou non, et, si ce n'est pas le cas, la raison de l'inaptitude à fonctionner, par exemple une défaillance technique, des travaux d'entretien ;
- un symbole est attribué à chaque installation ou à un groupe d'installations ;
- le symbole classifie le type de l'installation et/ou la capacité à fonctionner de l'installation respective ;
- tous les symboles sont rassemblés sous la forme d'un tableau récapitulatif (figure 2, figure 3),
le procédé est en outre **caractérisé par** les étapes suivantes :
- tous les symboles réunis dans le tableau récapitulatif sont enregistrés sous la forme de fichiers électroniques et distribués ;
- les fichiers électroniques sont distribués sur un serveur de réseau Internet, auquel est attribuée une adresse précise, grâce à laquelle le serveur de réseau peut être sélectionné pour appeler les fichiers par l'intermédiaire de l'Internet.

2. Procédé selon la revendication 1,
**caractérisé en ce que** l'on a également recourt à une carte géographique pour établir le tableau récapitulatif, et les symboles sont indiqués sur la carte géographique sur le lieu de l'installation, la carte géographique pouvant être enregistrée dans un fichier propre.

3. Procédé selon l'une quelconque des revendications précédentes,
**caractérisé en ce que** les données de puissance des installations respectives, dont les données sont enregistrées, sont totalisées et sont indiquées conjointement avec le tableau récapitulatif, pour une période précise, par exemple par jour, par semaine, par mois, etc.

4. Procédé selon la revendication 3,
**caractérisé en ce que** la somme (B) des données de puissance est mise en relation avec la somme de la puissance disponible (A) de toutes les installations de même type, dont les données d'exploitation sont enregistrées et dépouillées, et **en ce que** cette valeur est émise conjointement aux informations du tableau récapitulatif ou séparément de celles-ci.

5. Procédé selon la revendication 4, **caractérisé en ce que**, dans chaque tableau récapitulatif respectivement sélectionnable, au moins un type d'installation sélectionné peut être extrait.

6. Procédé selon l'une quelconque des revendications précédentes, **caractérisé en ce qu'**un contrôle d'accès est prévu, qui demande au moins des informations d'authentification, dont la saisie correcte permet d'afficher d'autres informations.

7. Procédé selon l'une quelconque des revendications précédentes, **caractérisé en ce qu'**une divergence de valeurs limites et/ou de valeurs comparatives pouvant être prédéfinies influence l'affichage.

8. Procédé selon l'une quelconque des revendications précédentes, **caractérisé par** un affichage simultané de plusieurs tableaux récapitulatifs de même type et/ou de types différents et/ou par la possibilité d'alterner entre une pluralité de tableaux récapitulatifs, la dimension de l'affichage d'au moins un tableau récapitulatif et de préférence de tous les tableaux récapitulatifs étant modifiable.
